# EUROPÄISCHE PATENTSCHRIFT

(11) **EP 3 230 611 B1**
(45) Veröffentlichungstag und Bekanntmachung des Hinweises auf die Patenterteilung: **12.09.2018**
(21) Anmeldenummer: 15804322.4
(22) Anmeldetag: 14.10.2015
(51) Int. Cl.: F16D 13/38, F16D 21/06

(54) **KUPPLUNGS-AUSGLEICHSKOLBEN**
CLUTCH COMPENSATION PISTON
PISTON DE COMPENSATION D'ACCOUPLEMENT

(30) Priorität: 08.12.2014 DE 102014225143
(43) Veröffentlichungstag der Anmeldung: 18.10.2017
(73) Patentinhaber: Federal-Mogul Sealing Systems GmbH, 57562 Herdorf (DE)
(72) Erfinder: YOLDJOU, Cem, 40589 Düsseldorf (DE); SZELE, Erika, 8020 Graz (AT)
(74) Vertreter: Becker Kurig Straus
(86) Internationale Anmeldenummer: PCT/EP2015/073744
(87) Internationale Veröffentlichungsnummer: WO 2016/091436

(56) Entgegenhaltungen:
- DE-A1-102011 006 029
- DE-A1-102013 012 815

## Beschreibung

Die vorliegende Erfindung betrifft einen Ausgleichskolben für eine Kupplung, insbesondere für Doppelkupplungsgetriebe von Fahrzeugen. Solche Ausgleichkolben sind aus den Druckschrifen DE102013012815A1 und DE102011006029A1 bekannt. Kupplungen in Fahrzeugen weisen je nach Typ einen oder mehrere Betätigungskolben auf, die Reibkupplungen betätigen, um die Kraftübertragung wie gewünscht zu steuern. In Doppelkupplungsgetrieben etwa werden beim Gangwechsel abwechselnd die Kupplungen des gerade eingelegten und des einzulegenden Gangs getrennt bzw. in Eingriff gebracht. Beim Anfahren des Fahrzeugs wird aus dem Leerlauf heraus ein Gang eingelegt, indem die Reibkupplung des ersten Gangs mittels des Betätigungskolbens in Eingriff gebracht wird.

Kupplungen weisen weiterhin pro Reibkupplung einen so genannten Ausgleichskolben auf, der dafür sorgt, dass die nicht betätigte Kupplung in den getrennten Zustand rückgestellt wird. Üblicherweise werden dafür Federpakete eingesetzt, die durch eine entsprechende Rückstellkraft die Kupplung bei Nichtbetätigung in die getrennte Stellung zurück drücken. Kolbenteile bilden die Schnittstelle zwischen den Federelementen und den rückzustellenden Betätigungskolben und positionieren die Federelemente.

Weiterhin werden in Dichtungen, insbesondere Doppelkupplungsgetrieben, Dichtelemente eingesetzt. Diese dichten bewegliche Teile der Kupplung gegeneinander ab, beispielsweise bei Ölbadkupplungen.

Solche bekannten Ausgleichskolben bestehen aus separaten, nicht miteinander verbundenen Teilen. Jedes Bauteil erfüllt lediglich seine spezifische Funktion. Die Federpakete stellen die Rückstellkräfte bereit, die Dichtelemente übernehmen die Abdichtfunktion, und ein oder mehrere Kolbenteile positionieren die Federpakete und bilden die Anlageflächen für den rückzustellenden Betätigungskolben.

Das Vorliegen von einzelnen Teilen macht die Montage der entsprechenden Kupplung bzw. des Getriebes mit der Kupplung aufwendiger und kann zu Einbaufehlern führen. Es erschwert weiterhin, die beteiligten Bauteile optimal aufeinander abzustimmen. Da bei unverbundenen Einzelteilen kein geschlossenes bzw. abgedichtetes System vorgesehen werden kann, sind die Einzelteile bis zur Montage potentiell schädlichen Einflüssen ausgesetzt, wie etwa Schmutzaufnahme, mechanische Beschädigung oder Korrosion.

Es ist daher die Aufgabe der vorliegenden Erfindung, ein Ausgleichsmodul für eine Kupplung bereitzustellen, das die vorstehend genannten Probleme löst oder zumindest die Nachteile des Standes der Technik vermindern kann.

Gemäß einem ersten Aspekt wird ein Ausgleichsmodul für eine Kupplung bereitgestellt, umfassend:
- einen ersten ringförmigen Kolbenteil;
- einen zweiten ringförmigen Kolbenteil, der in Axialrichtung dem ersten Kolbenteil gegenüber und beabstandet davon angeordnet ist;
- mindestens drei in Axialrichtung arbeitende Federelemente, die axial zwischen dem ersten und dem zweiten Kolbenteil angeordnet sind; und
ein Dichtelement mit mindestens einer radial nach außen gerichteten Dichtlippe, das an dem ersten Kolbenteil angebracht ist;
wobei die Federelemente, der erste und der zweite Kolbenteil verliersicher miteinander verbunden sind, um ein integrales Modul zu bilden.

Durch die Integration der bisher separaten Einzelteile in einem Modul werden unter anderem die folgenden Vorteile erzielt:
Der Einbau wird erleichtert, Fehler etwa bei der gegenseitigen Positionierung von Einzelteilen können nicht mehr auftreten. Das integrale Modul kann als kompakte Einheit ausgelegt werden. Das Ausgleichsmodul erfüllt gleichzeitig die Funktionen Rückstellung, Abdichtung und Anlagefläche. Bevorzugt kann das Ausgleichsmodul als abgeschlossener Raum ausgelegt werden. Dadurch können beispielsweise die innenliegenden Federelemente besser gegen Verschmutzung, Korrosion und Beschädigung geschützt werden, insbesondere solange das Ausgleichsmodul noch nicht eingebaut ist. Durch die Integration von zumindest drei Bauteilgruppen (Kolbenteile, Federelemente, Dichtelement) wird eine optimale Abstimmung der Bauteile in Bezug aufeinander erleichtert.

Aufgrund der Ringgeometrie von Kupplung und Ausgleichsmodul sind vorzugsweise mindestens 3 Schraubenfedern vorzusehen, die im Wesentlichen symmetrisch über den Umfang angeordnet sind. Bevorzugt ist die Anzahl der Federelemente jedoch wesentlich größer, um eine gleichmäßigere und zuverlässigere Krafteinleitung zu gewährleisten.

Gemäß einer Ausführungsform weist der erste Kolbenteil einen Laufflächenabschnitt mit einer radial innen liegenden Lauffläche auf, an der die mindestens eine Dichtlippe im eingebauten Zustand des Ausgleichsmoduls dichtend anliegt.

Herkömmliche Dichtelemente dichten nicht an dem Ausgleichskolben selbst ab, sondern an einer anderen Anlagefläche der Kupplung, d.h. die Lauffläche des Dichtelements ist nicht Bestandteil des Ausgleichskolbens. Durch diese Ausführungsform, bei der die Lauffläche ein integraler Bestandteil des Ausgleichsmoduls ist, können unter anderem die folgenden Vorteile erzielt werden:
Es wird eine verbesserte Anpassung der Partner Lauffläche und Dichtelement ermöglicht. Durch das dichtende Anliegen des Dichtelements an dem Laufflächenabschnitt des zweiten Kolbenteils kann ein geschlossenes, abgedichtetes System erzeugt werden, das gegenüber äußeren Einflüssen und Beschädigungen - insbesondere vor dem Einbau, aber auch im Betrieb - besser geschützt ist.

Gemäß einer Ausführungsform sind
- die Federelemente sowohl mit dem ersten als auch dem zweiten Kolbenteil verliersicher verbunden sind; oder
- der erste und der zweite Kolbenteil verliersicher miteinander verbunden sind.

In jedem Fall muss sichergestellt sein, dass die Elemente des Ausgleichsmoduls derart verliersicher sind, dass ein integrales Modul resultiert, dessen Bestandteile sich nicht von selbst voneinander lösen. Dies kann auf verschiedene Arten erfolgen. Beispielsweise können die beiden Kolbenteile derart miteinander verbunden sein, dass die zwischen ihnen befindlichen Federelemente ebenfalls verliersicher sind, obwohl diese nicht zwingend auch mit den Kolbenteilen verbunden sein müssen. Bevorzugt sind die Federelemente aber auch in dieser Alternative zumindest mit einem der Kolbenteile verliersicher verbunden. Alternativ oder auch zusätzlich können die Federelemente mit beiden Kolbenteilen verbunden sein, d.h. die Federelemente verbinden die Kolbenteile, wodurch der Zusammenhalt als integrales Modul ebenfalls gewährleistet werden kann.

Gemäß einer Ausführungsform liegt im nicht eingebauten Zustand des Ausgleichsmoduls zwischen der mindestens einen Dichtlippe und dem Laufflächenabschnitt ein axialer Abstand vor.

Im nicht eingebauten Zustand kann die Federkraft der Federelemente voll wirken bzw. können die Federelemente maximal ausgelenkt werden, da keine Gegenflächen dies verhindern. Gemäß dieser Ausführungsform ist der Laufflächenabschnitt in seiner axialen Länge derart bemessen, dass bei ungestörter Auslenkung der Federelemente ein Spalt zwischen Dichtlippe und dem Rand des Laufflächenabschnitts vorliegt. Im Gegensatz dazu wird das Ausgleichsmodul im Einbauzustand in axialer Richtung so weit zusammengedrückt, dass die Dichtlippe auf der Lauffläche zu liegen kommt. Auf diese Weise ist es möglich, Material für den Laufflächenabschnitt einzusparen, ohne die Funktion im Betrieb zu beeinträchtigen.

Gemäß einer Ausführungsform ist dabei weiterhin der Rand des Laufflächenabschnitts, der der mindestens einen Dichtlippe gegenüberliegt, abgerundet, abgeschrägt, abgekröpft oder mit einer Kombination davon ausgeführt ist, so dass die mindestens eine Dichtlippe beim Einbau des Ausgleichsmoduls, bei dem der erste und der zweite Kolbenteil unter Kompression der Federelemente in axialer Richtung einander angenähert werden, über den Rand gleiten kann, um ihre Einbauposition auf der Lauffläche des Laufflächenabschnitts einzunehmen.

Gemäß dieser Ausführungsform wird der Rand des Laufflächenabschnitts mittels einem oder mehreren aus Abrunden, Abschrägen oder Abkröpfen so gestaltet, dass die Dichtlippe möglichst leicht und widerstandsfrei darüber gleiten kann, wenn das Ausgleichsmodul für den Einbau axial zusammengedrückt wird. Der gemäß dieser Ausführungsform im nichteingebauten Zustand vorliegende Spalt zwischen Laufflächenabschnitt und Dichtlippe wird vor oder während dem Einbau verringert, bis die Dichtlippe über den Rand gleitet und ihre Einbauposition auf der Lauffläche einnimmt.

Gemäß einer Ausführungsform
- weist der Laufflächenabschnitt mindestens ein Blockierelement auf;
- das Dichtelement mindestens ein korrespondierendes Blockierelement auf; und
- sind im nicht eingebauten Zustand des Ausgleichsmoduls der erste und der zweite Kolbenteil mittels der Blockierelemente verliersicher verbunden.

Gemäß dieser Ausführungsform kann vorteilhaft das Dichtelement dazu verwendet werden, eine verliersichere Verbindung zwischen den beiden Kolbenteilen zu gewährleisten. Bevorzugt kann dazu das Blockierelement auf Seiten des Dichtelements eine weitere Dichtlippe sein, alternativ ist es sogar möglich, dass die primäre Dichtlippe dies übernimmt. Bevorzugt kann das Blockierelement auf Seiten des Laufflächenabschnitts eine geschlossene Erhöhung oder Sicke sein, so dass auch im nicht eingebauten Zustand eine gute Abdichtung erzielt wird. Alternativ können korrespondierende Vorsprünge bzw. Aussparungen vorgesehen werden, die im nicht eingebauten Zustand so ineinander passen, dass die Kolbenteile verliersicher verbunden sind. Gemäß der Erfindung sind die Federelemente mit dem ersten und/oder dem zweiten Kolbenteil verliersicher verbunden durch eines oder eine Kombination von:
- Schweißen;
- Crimpen;
- Kleben; und
- Einrasten.

Gemäß einer Ausführungsform weisen die axialen Innenseiten des ersten und/oder des zweiten Kolbenteils Vorsprünge auf, mit denen die Federelemente verliersicher verbunden sind.

Besonders bevorzugt werden die Federelemente mittels Vorsprüngen an den Kolbenteilen gesichert. Beispielsweise können die Federelemente an ihren axialen Endseiten gespreizt oder komprimiert werden, um über oder in entsprechend vorspringende Elemente zu greifen. Bevorzugt haben die Vorsprünge daher einen im Wesentlichen L-förmigen Querschnitt, der von innen und/oder von außen formschlüssig in die Enden der Federelemente eingreift, um diese verliersicher zu befestigen. Dies kann erfindungsgemäß auch mit Crimpen verknüpft werden, etwa in der Art, dass die Vorsprünge mit den Federelementen zusammengecrimpt werden, oder die Vorsprünge um die Federelemente herum gecrimpt werden.

Gemäß einer Ausführungsform sind die Federelemente Schraubenfedern. Schraubenfedern sind bewährte und zuverlässige Federelemente, alternativ sind jedoch auch alle anderen Elemente verwendbar, die bei dem zur Verfügung stehenden Volumen eine entsprechende Rückstellkraft zuverlässig aufbringen können.

Gemäß einer Ausführungsform ist die Kupplung Teil eines Doppelkupplungsgetriebes, und das Ausgleichsmodul ist einem Betätigungskolben einer der Kupplungen zugeordnet. Es ist möglich, nur einen oder auch beide bzw. alle Ausgleichskolben durch das bzw. ein erfindungsgemäßes Ausgleichsmodul zu ersetzen. Je nach Geometrie des Doppelkupplungsgetriebes können dabei identisch oder verschieden aufgebaute Ausgleichsmodule verwendet werden. Beispielsweise kann ein Ausgleichsmodul die integrierte Lauffläche aufweisen, während ein zweites Ausgleichsmodul aus Platzgründen die Lauffläche für die Dichtlippe nicht aufweist, und die Dichtlippe auf einem Teil des Kupplungs- bzw. Getriebegehäuses aufliegt und im Betrieb läuft.

Kurze Beschreibung der Zeichnung
- Fig. 1: zeigt in einer dreidimensionalen Schnittansicht einen Teil eines Doppelkupplungsgetriebes;
- Fig. 2: zeigt in einer dreidimensionalen Schnittansicht eine erste Ausführungsform eines Ausgleichsmoduls gemäß der Erfindung;
- Fig. 3: zeigt einen Querschnitt einer zweiten Ausführungsform der Erfindung;
- Fig. 4: zeigt einen Querschnitt einer dritten Ausführungsform der Erfindung im nicht eingebauten Zustand;
- Fig. 5: zeigt einen Querschnitt der Ausführungsform von Fig. 4 im eingebauten und nicht betätigten Zustand;
- Fig. 6: zeigt einen Querschnitt der Ausführungsform von Fig. 4 im eingebauten und betätigten Zustand;
- Fig. 7: zeigt einen Querschnitt einer vierten Ausführungsform; und
- Fig. 8: zeigt einen Querschnitt einer fünften Ausführungsform.

### Detaillierte Beschreibung

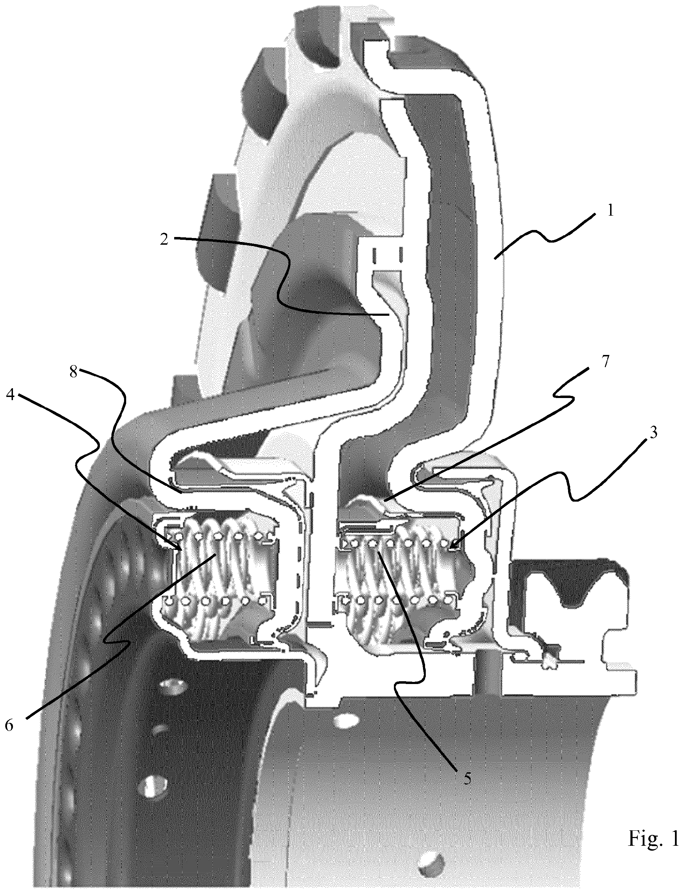

In Figur 1 ist ein Teil eines Doppelkupplungsgetriebes in einer dreidimensionalen Schnittansicht gezeigt. Ein erster Betätigungskolben 1 ist vorgesehen, um eine erste Reibkupplung (nicht gezeigt) zu betätigen, die auf der in der Figur linken Seite radial weiter außen angeordnet wäre. In der gezeigten Stellung befindet sich der Betätigungskolben 1 in der nicht betätigten bzw. Leerlauf-Stellung. Ein zweiter Betätigungskolben 2 ist vorgesehen, um eine zweite Reibkupplung (nicht gezeigt) zu betätigen, die auf der in der Figur linken Seite radial weiter innen angeordnet wäre. In der gezeigten Stellung befindet sich der Betätigungskolben 2 in der nicht betätigten bzw. Leerlauf-Stellung.

Um die jeweiligen Betätigungskolben 1, 2 in der Leerlaufstellung zu halten, sind weiterhin Ausgleichskolben 3 und 4 vorgesehen. Diese umfassen jeweils einen Satz Federelemente 5 bzw. 6. Weiterhin sind jeweils Dichtelemente 7, 8 an der radialen Außenseite vorhanden. Wird der jeweilige Betätigungskolben nach links gedrückt, um die (nicht gezeigte) Reibkupplung in Eingriffsstellung zu betätigen, werden die jeweiligen Federelemente komprimiert, und die Dichtelemente gleiten auf den jeweiligen Laufflächen (relativ gesehen nach rechts). Wird der jeweilige Betätigungskolben nicht mehr betätigt, um die zugehörige Reibkupplung zu trennen, drücken die Federelemente durch ihre Vorspannung den Betätigungskolben in seine Leerlaufstellung zurück, wobei die Dichtelemente auf der Lauffläche zurück gleiten.

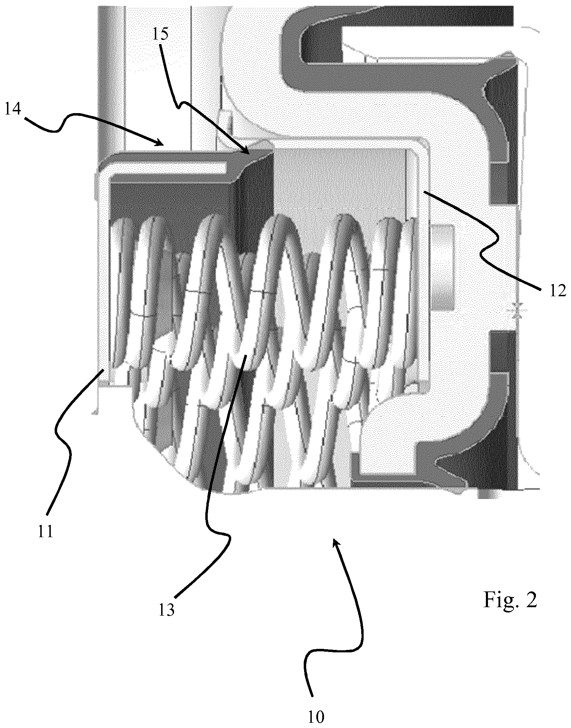

Figur 2 zeigt eine erste Ausführungsform der Erfindung in einer dreidimensionalen Schnittansicht. Ein Ausgleichsmodul 10 umfasst einen ersten Kolbenteil 11, einen zweiten Kolbenteil 12, mehrere Federelemente 13 sowie ein Dichtelement 14 mit einer Dichtlippe 15. Die Elemente 11-15 sind verliersicher miteinander verbunden, um ein integrales Ausgleichsmodul zu bilden.

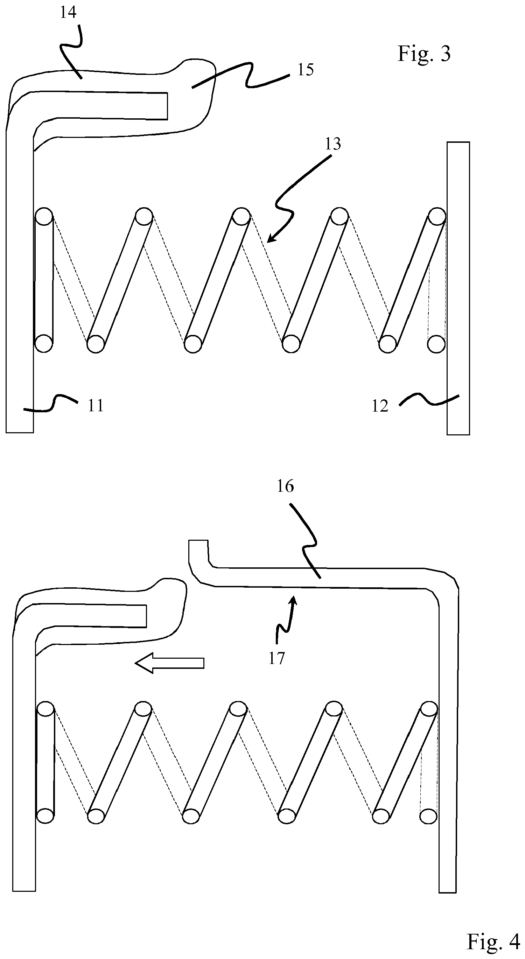

Figur 3 zeigt eine zweite Ausführungsform der Erfindung im Querschnitt. In dieser Ausführung ist der erste Kolbenteil 11 mit einem im Wesentlichen L-förmigen Querschnitt ausgebildet. Die Federelemente 13 sind bei dieser Ausführung sowohl an dem ersten Kolbenteil 11 als auch dem zweiten Kolbenteil 12 verliersicher angebracht, beispielsweise angeschweißt oder angeklebt.

An dem horizontal verlaufenden Schenkel des L-Querschnitts ist das Dichtelement 14, beispielsweise ein angespritztes Elastomerdichtelement, angebracht. Das Dichtelement 14 weist eine radial nach außen vorspringende Dichtlippe 15 auf. Der zweite Kolbenteil 12 weist bei dieser Ausführung einen streifenförmigen Querschnitt auf. Zwischen der Dichtlippe 15 und dem ihr gegenüberliegenden Rand des Kolbenteils 12 liegt ein axialer Spalt vor. Die hier gezeigte Geometrie bedingt, dass die Dichtlippe im Einbauzustand auf einem Teil der Kupplung bzw. des Getriebes läuft. Diese Ausführungsform, die etwa für beengte Platzverhältnisse vorgesehen sein kann, ist beispielsweise geeignet, um den linken Ausgleichskolben bei einem Getriebe wie in Fig. 1 zu ersetzen.

Figur 4 zeigt eine dritte Ausführungsform der Erfindung im Querschnitt, in einem nicht eingebauten Zustand, ähnlich der von Fig. 3. Im Vergleich zu der Ausführungsform von Fig. 3 weist diese Ausführungsform jedoch einen anders ausgebildeten Kolbenteil 12 auf. Der Kolbenteil 12 ist hier mit einem Laufflächenabschnitt 16 versehen, der hier als Schenkel eines im Wesentlichen L-förmigen Querschnitts ausgeformt ist. In dieser Figur ist der nicht eingebaute Zustand gezeigt, in dem die Federelemente 13 gegenüber dem Einbauzustand soweit ausgelenkt sind (angedeutet durch einen Pfeil), so dass zwischen der Dichtlippe und dem ihr gegenüberliegenden Rand (der hier als abgekröpft dargestellt ist) ein axialer Spalt besteht.

Diese Ausführungsform, die für etwas großzügigere Platzverhältnisse vorgesehen sein kann, ist beispielsweise geeignet, um den rechten Ausgleichskolben bei einem Getriebe wie in Fig. 1 zu ersetzen.

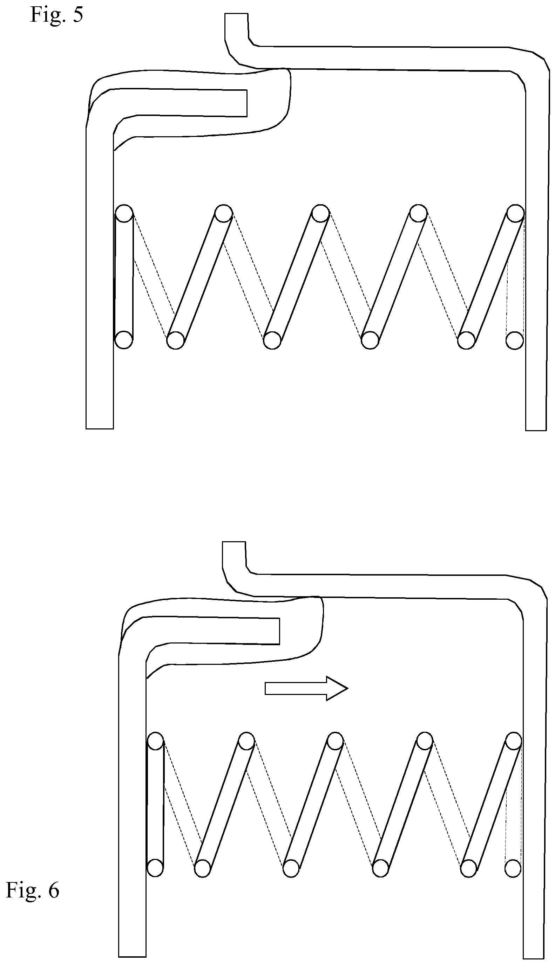

Figur 5 zeigt die Ausführungsform von Fig. 4 im Einbauzustand, in nicht betätigter Stellung. Hier sind die Federelemente 13 durch axiales Zusammendrücken der Kolbenteile 11 und 12 so weit komprimiert, dass die Dichtlippe 15 über den abgekröpften Rand des Laufflächenabschnitts geglitten ist und an der Lauffläche 17 des Laufflächenabschnitts 16 anliegt. Zu diesem Zweck kann der Rand des Laufflächenabschnitts 16 bevorzugt so gestaltet sein, dass dieses Darübergleiten der Dichtlippe erleichtert wird. Dies kann durch Abkröpfen, Abschrägen, Abrunden oder Kombinationen davon geschehen.

Figur 6 zeigt die Ausführungsform von Fig. 4 im Einbauzustand, in zumindest teilweise betätigter Stellung. Hier sind die Federelemente 13 durch axiales Zusammendrücken der Kolbenteile 11 und 12 aufgrund einer Betätigung des zugehörigen Betätigungskolbens des Getriebes gegenüber dem in Figur 5 gezeigten Zustand noch weiter komprimiert (durch einen Pfeil angedeutet). Die Dichtlippe gleitet dabei über die Lauffläche 17.

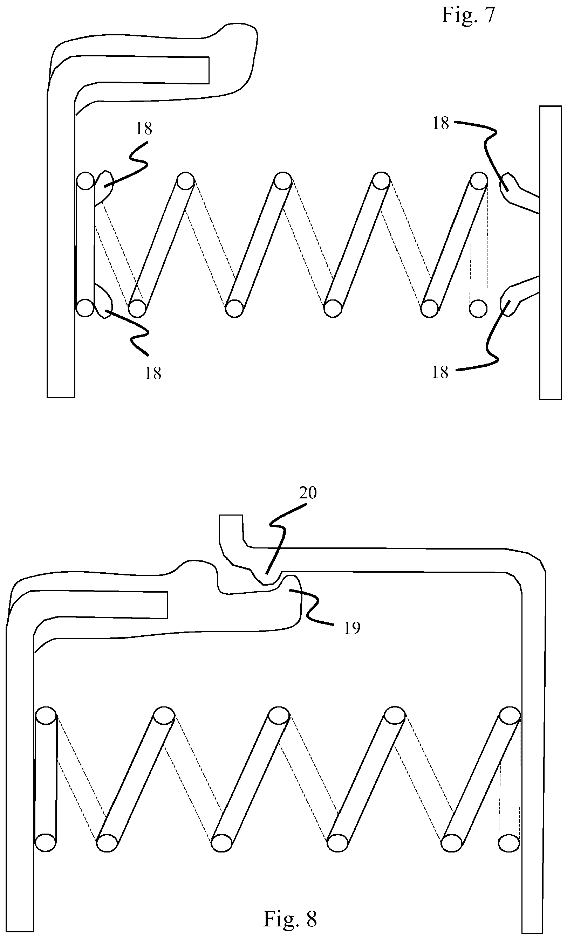

Figur 7 zeigt eine vierte Ausführungsform ähnlich der von Figur 3. Hier ist die Ausführung gezeigt, bei der die Federelemente 13 mittels Vorsprüngen 18 an den Kolbenteilen 11 und 12 befestigt werden. Wie man auf der linken Seite am Kolbenteil 11 sieht, sind die Vorsprünge 18 derart gestaltet, das sie von innen in die Windungen der hier beispielhaft als Schraubenfedern gezeigten Federelemente 13 greifen, um diese verliersicher zu befestigen. Die Federn 13 können an solchen Vorsprüngen 18 leicht durch Aufspreizen angebracht werden. Alternativ können die Vorsprünge auch umgekehrt von außen in die Windungen der Federn 13 eingreifen, wobei die Federn dann durch radiales Zusammendrücken montiert werden können. Auf der rechten Seite am Kolbenteil 12 ist die Situation mit noch nicht angebrachten Federn 13 gezeigt, so dass die Vorsprünge 18 zu erkennen sind.

Auch wenn diese Art der Befestigung der Federelemente bevorzugt ist, können auch andere Befestigungsarten mit der Erfindung verwendet werden, einschließlich Schweißen, Kleben, Crimpen, Einhaken oder dergleichen. Es ist dabei lediglich sicherzustellen, dass die Federelemente verliersicher verbunden sind. Ein Spiel darf dabei vorhanden sein, bei alternativen Befestigungsmethoden wie Schweißen etc. wird hingegen kein Spiel vorhanden sein.

Bei Ausführungsformen analog denen der Figur 7 ist es nicht erforderlich, dass die Kolbenteile 11 und 12 ebenfalls verbunden sind. Alternativ ist dies aber zusätzlich ebenfalls möglich.

Figur 8 zeigt eine fünfte Ausführungsform, im nicht eingebauten Zustand des Ausgleichsmoduls. Hierbei besteht kein axialer Spalt, es handelt sich um ein vollständig geschlossenes System. Bei dieser Ausführung sind der erste Kolbenteil 11 und der zweite Kolbenteil 12 verliersicher miteinander verbunden, wie im Folgenden erläutert wird. Es ist daher nicht unbedingt nötig, aber alternativ natürlich möglich, dass die Federelemente 13 mit einem oder beiden Kolbenteilen verbunden sind.

An dem Laufflächenabschnitt 16 ist ein Blockierelement 20 vorgesehen, etwa in Form einer umlaufenden Erhebung. Möglich wäre auch eine Sicke bzw. Einprägung in den Laufflächenabschnitt (nicht gezeigt). An dem Dichtelement ist ein korrespondierendes Blockierelement 19 vorgesehen, das hinter die Erhebung 20 greift und so die Kolbenteile 11 und 12 zusammenhält. Alternative Ausführungen mit entsprechenden korrespondierenden Blockierelementen wie Vertiefungen, Vorsprünge und dergleichen sind ebenfalls möglich.

Beim Einbau das hier gezeigten Ausgleichsmoduls wird die Hauptdichtlippe 15 über die Erhebung 20 gleiten und auf der Lauffläche 17 zu liegen kommen. Sie kann nun ihre Abdichtfunktion erfüllen. Das Blockierelement 19 kann nun funktionslos sein, es kann aber auch bevorzugt als zusätzliche Dichtlippe ausgestaltet sein.

Sofern auf diese oder andere Arten sichergestellt ist, dass die Federelemente bereits durch das verliersichere Verbinden der Kolbenteile in dem Ausgleichsmodul gehalten werden, ist es prinzipiell nicht nötig, die Federelemente an einem oder beiden Kolbenteilen verliersicher zu befestigen. Alternativ ist dies natürlich dennoch möglich. Es kann jedoch genügen, Führungen für die Federelemente vorzusehen, die für sich genommen keine Verliersicherheit gewährleisten, sondern lediglich die Positionen der Federelemente in Radialrichtung fixieren.

## Patentansprüche

1. Ausgleichsmodul (10) für eine Kupplung, umfassend:
- einen ersten ringförmigen Kolbenteil (11);
- einen zweiten ringförmigen Kolbenteil (12), der in Axialrichtung dem ersten Kolbenteil (11) gegenüber und beabstandet davon angeordnet ist;
- mindestens drei in Axialrichtung arbeitende Federelemente (13), die axial zwischen dem ersten (11) und dem zweiten Kolbenteil (12) angeordnet sind; und
ein Dichtelement (14) mit mindestens einer radial nach außen gerichteten Dichtlippe (15), das an dem ersten Kolbenteil (11) angebracht ist; **dadurch gekennzeichnet dass**, die Federelemente (13), der erste (11) und der zweite Kolbenteil (12) verliersicher miteinander verbunden sind, um ein integrales Modul (10) zu bilden, wobei die Federelemente (13) mit dem ersten (11) und/oder dem zweiten Kolbenteil (12) verliersicher verbunden sind durch eines oder eine Kombination von:
- Schweißen;
- Crimpen;
- Kleben; und
- Einrasten..

2. Ausgleichsmodul (10) nach Anspruch 1, wobei der erste Kolbenteil (11) einen Laufflächenabschnitt (16) mit einer radial innen liegenden Lauffläche (17) aufweist, an der die mindestens eine Dichtlippe (15) im eingebauten Zustand des Ausgleichsmoduls (10) dichtend anliegt.

3. Ausgleichsmodul (10) nach Anspruch 1 oder 2, wobei
- die Federelemente (13) sowohl mit dem ersten (11) als auch dem zweiten Kolbenteil (12) verliersicher verbunden sind; oder
- der erste (11) und der zweite Kolbenteil (12) verliersicher miteinander verbunden sind.

4. Ausgleichsmodul (10) nach einem der vorhergehenden Ansprüche, wobei im nicht eingebauten Zustand des Ausgleichsmoduls (10) zwischen der mindestens einen Dichtlippe (15) und dem Laufflächenabschnitt (16) ein axialer Abstand vorliegt.

5. Ausgleichsmodul nach Anspruch 4, wobei der Rand des Laufflächenabschnitts (16), der der mindestens einen Dichtlippe (15) gegenüberliegt, abgerundet, abgeschrägt, abgekröpft oder mit einer Kombination davon ausgeführt ist, so dass die mindestens eine Dichtlippe (15) beim Einbau des Ausgleichsmoduls (10), bei dem der erste (11) und der zweite Kolbenteil (12) unter Kompression der Federelemente (13) in axialer Richtung einander angenähert werden, über den Rand gleiten kann, um ihre Einbauposition auf der Lauffläche (17) des Laufflächenabschnitts (16) einzunehmen.

6. Ausgleichsmodul (10) nach einem der vorhergehenden Ansprüche, wobei
- der Laufflächenabschnitt (16) mindestens ein Blockierelement (20) aufweist;
- das Dichtelement (14) mindestens ein korrespondierendes Blockierelement (19) aufweist; und
- wobei im nicht eingebauten Zustand des Ausgleichsmoduls (10) der erste (11) und der zweite Kolbenteil (12) mittels der Blockierelemente (19, 20) verliersicher verbunden sind.

7. Ausgleichsmodul (10) nach einem der vorhergehenden Ansprüche, wobei die axialen Innenseiten des ersten (11) und/oder des zweiten Kolbenteils (12) Vorsprünge (18) aufweisen, mit denen die Federelemente (13) verliersicher verbunden sind.

8. Ausgleichsmodul (10) nach einem der vorhergehenden Ansprüche, wobei die Federelemente (13) Schraubenfedern sind.

9. Ausgleichsmodul (10) nach einem der vorhergehenden Ansprüche, wobei die Kupplung Teil eines Doppelkupplungsgetriebes ist, und wobei das Ausgleichsmodul (10) einem Betätigungskolben einer der Kupplungen zugeordnet ist.

## Claims

1. A balance module (10) for a clutch, comprising:
- a first annular piston part (11);
- a second annular piston part (12), which is arranged opposite the first piston part (11) in the axial direction and spaced therefrom;
- at least three spring elements (13) operating in the axial direction, which are arranged axially between the first (11) and the second piston part (12); and
a sealing element (14) with at least one radially outwardly directed sealing lip (15), which is attached on the first piston part (11);
**characterized in that**
the spring elements (13), the first (11) and the second piston part (12) are connected to one another in a loss-proof manner, in order to form an integral module (10),
wherein the spring elements (13) are connected to the first (11) and/or the second piston part (12) in a loss-proof manner by means of one or a combination of:
- welding;
- crimping;
- adhesive bonding; and
- latching.

2. The balance module (10) according to Claim 1, wherein the first piston part (11) has a running surface section (16) with a radially inner running surface (17), on which the at least one sealing lip (15) bears in a sealing manner in the installed state of the balance module (10).

3. The balance module (10) according to Claim 1 or 2, wherein
- the spring elements (13) are connected in a loss-proof manner both to the first (11) and the second piston part (12); or
- the first (11) and the second piston part (12) are connected to one another in a loss-proof manner.

4. The balance module (10) according to one of the preceding claims, wherein in the non-installed state of the balance module (10), an axial space is present between the at least one sealing lip (15) and the running surface section (16).

5. The balance module according to Claim 4, wherein the edge of the running surface section (16), which is opposite the at least one sealing lip (15), is realized such that it is rounded, bevelled, angled or a combination thereof, so that the at least one sealing lip (15) can slide over the edge - during the installation of the balance module (10), in which the first (11) and the second piston part (12) are brought closer together under compression of the spring elements (13) in the axial direction - in order to assume its installation position on the running surface (17) of the running surface section (16).

6. The balance module (10) according to one of the preceding claims, wherein
- the running surface section (16) has at least one locking element (20);
- the sealing element (14) has at least one corresponding locking element (19); and
- wherein in the non-installed state of the balance module (10), the first (11) and the second piston part (12) are connected in a loss-proof manner by means of the locking elements (19, 20).

7. The balance module (10) according to one of the preceding claims, wherein the axial inner sides of the first (11) and/or the second piston part (12) have projections (18), to which the spring elements (13) are connected in a loss-proof manner.

8. The balance module (10) according to one of the preceding claims, wherein the spring elements (13) are coil springs.

9. The balance module (10) according to one of the preceding claims, wherein the clutch is part of a dual-clutch gearbox, and wherein the balance module (10) is assigned to an operating piston of one of the clutches.

## Revendications

1. Module d'équilibrage (10) pour un embrayage, comprenant :
- une première partie de piston de forme annulaire (11) ;
- une deuxième partie de piston de forme annulaire (12), qui est disposée dans la direction axiale en vis-à-vis de la première partie de piston (11) et espacée de celle-ci ;
- au moins trois éléments de ressort (13) agissant dans la direction axiale, qui sont disposés axialement entre la première (11) et la deuxième (12) partie de piston ; et
un élément d'étanchéité (14) comportant au moins une lèvre d'étanchéité orientée radialement vers l'extérieur (15), qui est montée sur la première partie de piston (11) ;
**caractérisé en ce que**
les éléments de ressort (13), la première (11) et la deuxième (12) partie de piston sont reliées les unes aux autres de manière imperdable, afin de former un module (10) en un seul tenant, dans lequel les éléments de ressort (13) sont reliés de manière imperdable avec la première (11) et/ou la deuxième (12) partie de piston par un ou une combinaison de :
- soudage ;
- sertissage ;
- collage ; et
- encliquetage.

2. Module d'équilibrage (10) selon la revendication 1, dans lequel la première partie de piston (11) présente une section de surface de roulement (16) avec une surface de roulement (17) située radialement à l'intérieur, sur laquelle au moins une lèvre d'étanchéité (15) en l'état monté du module d'équilibrage (10) vient reposer de manière étanche.

3. Module d'équilibrage (10) selon la revendication 1 ou 2, dans lequel
- les éléments de ressort (13) ainsi que la première (11) et la deuxième (12) partie de piston sont reliées de manière imperdable ; ou
- la première (11) et la deuxième (12) partie de piston sont reliées l'une à l'autre de manière imperdable.

4. Module d'équilibrage (10) selon une des revendications précédentes, dans lequel en l'état non monté du module d'équilibrage (10) entre au moins une lèvre d'étanchéité (15) et la section de surface de roulement (16) un espacement axial est présent.

5. Module d'équilibrage selon la revendication 4, dans lequel le bord de la section de surface de roulement (16), qui est opposé à au moins une lèvre d'étanchéité (15), est arrondi, chanfreiné, coudé ou réalisé avec une combinaison de ces derniers de sorte que au moins une lèvre d'étanchéité (15) lors du montage du module d'équilibrage (10), dans lequel la première (11) et la deuxième (12) partie de piston sont rapprochés l'un de l'autre dans la direction axiale sous la compression des éléments de ressort (13), puissent glisser sur le bord, afin d'adopter leur position de montage sur la surface de roulement (17) de la section de surface de roulement (16).

6. Module d'équilibrage (10) selon une des revendications précédentes, dans lequel
- la section de surface de roulement (16) présente au moins un élément de blocage (20),
- l'élément d'étanchéité (14) présent au moins un élément de blocage (19) correspondant ; et
- dans lequel en l'état non monté du module d'équilibrage (10) la première (11) et la deuxième (12) partie de piston sont reliées de manière imperdable au moyen des éléments de blocage (19,20).

7. Module d'équilibrage (10) selon une des revendications précédentes, dans lequel les côtés intérieurs axiaux de la première (11) et/ou la deuxième (12) partie de piston présentent des protubérances (18), avec lesquels les éléments de ressort (13) sont reliés de manière imperdable.

8. Module d'équilibrage (10) selon une des revendications précédentes, dans lequel les éléments de ressort (13) sont des ressorts hélicoïdaux.

9. Module d'équilibrage (10) selon une des revendications précédentes, dans lequel l'embrayage est une partie d'une boîte de vitesse à double embrayage et dans lequel le module d'équilibrage (10) est coordonné à un piston d'actionnement d'un des embrayages.
